# EUROPEAN PATENT APPLICATION

(11) **EP 4 703 758 A2**
(43) Date of publication of application: **04.03.2026**
(21) Application number: 25191506.2
(22) Date of filing: 24.07.2025
(51) Int. Cl.: G01S 7/282, G01S 7/288, G01S 7/292, G01S 7/35, G01S 13/10, G01S 13/34, G01S 13/44, G01S 13/931, G01S 13/95

(54) **MULTI-BAND RADAR APPARATUS WITH MULTI-DETECTION MODES AND METHOD THEREOF**

(30) Priority: 28.08.2024 TW 113132357
(71) Applicant: RichWave Technology Corp., Taipei City 114 (TW)
(72) Inventor: Yeh, Chiang-Hua, 114 Taipei City (TW)
(74) Representative: Straus, Alexander

(57) **Abstract**

A radar apparatus (10) and a radar detecting method are provided. The radar apparatus (10) includes a transmitting circuit (11), a transmitting antenna system (12) and a receiving antenna system (13). The transmitting circuit (11) is used to generate two transmission signals having different bandwidths. The transmitting antenna system (12) is used to transmit these two transmission signals. The receiving antenna system (13) is used to receive two reflected signals having different bandwidths. The two reflected signals are generated by the reflection of the two transmission signals by an external object (O). The transmission and reflected signals enable first and second detection modes with different detection powers, wherein the first detection mode has greater detection power than the second detection mode.

## Description

### Field of the Invention

The disclosure relates to a radar technology, and in particular relates to a radar apparatus and a radar detecting method.

### Background of the Invention

Radar technology is a means of target detection and tracking, and is widely used in military, aviation, meteorological and other fields. Radar may be divided into narrow band (NB) and wide band (WB) applications.

The advantage of narrow band radars (e.g., involving the band of 10.5 to 10.55 gigahertz (GHz)) is a higher allowable transmission power allocation, such as an equivalent isotropic radiated power (EIRP) of approximately +14 decibel-milliwatts (dBm), but the disadvantage is that the effective bandwidth is less than 50 megahertz (MHz). Therefore, the detectable range of narrow band radar is longer, but the range resolution of detection is rough.

The advantage of wide band radars (e.g., involving the band of 7.5 to 8.5 GHz) is a minimum effective bandwidth greater than 500 MHz. However, they have the disadvantage of a lower allowable average transmission power allocation, such as an EIRP of about -41.3 decibel-milliwatts per MHz. Therefore, the detectable range of wide band radar is shorter, but with finer range resolution.

It may be seen that narrow band and wide band radars each have their own advantages and disadvantages and are suitable for different application scenarios.

### Summary of the Invention

The invention is set out in the appended set of claims.

### Brief Description of the Drawings

The disclosure is described in detail with reference to the accompanying drawings, in which like reference signs designate like elements throughout the several figures, and wherein:
FIG. 1 is an element block diagram of a radar apparatus according to an embodiment of the disclosure;
FIG. 2A is an element block diagram of a radar apparatus according to an embodiment of the disclosure;
FIG. 2B is an element block diagram of a radar apparatus according to another embodiment of the disclosure;
FIG. 3A is an element block diagram of a radar apparatus according to an embodiment of the disclosure;
FIG. 3B is an element block diagram of a radar apparatus according to another embodiment of the disclosure;
FIG. 4A is a schematic diagram of signal and antenna switching according to an embodiment of the disclosure;
FIG. 4B is a schematic diagram of one-dimensional detection according to an embodiment of the disclosure;
FIG. 5 is a schematic diagram of the angle of arrival according to another embodiment of the disclosure;
FIG. 6A is a schematic diagram of signal and antenna switching according to another embodiment of the disclosure;
FIG. 6B is a schematic diagram of two-dimensional detection according to another embodiment of the disclosure; and
FIG. 7 is a flowchart of a radar detecting method according to an embodiment of the disclosure.

### Detailed Description

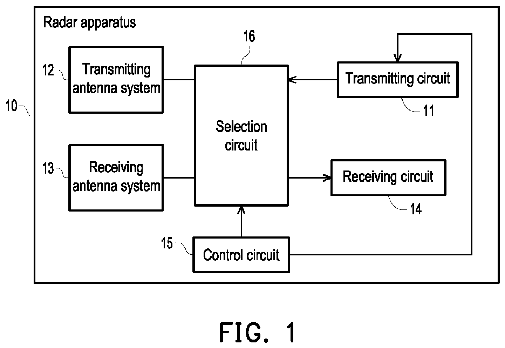

FIG. 1 is an element block diagram of a radar apparatus 10 according to an embodiment of the disclosure. Referring to FIG. 1, the radar apparatus 10 includes, for example, a transmitting circuit 11, a transmitting antenna system 12, a receiving antenna system 13, a receiving circuit 14, a control circuit 15, and a selection circuit 16. The radar apparatus 10 may be applied to fields such as meteorology, speed measurement, vehicle reversing, terrain, and military affairs.

The transmitting circuit 11 is used to generate transmission signals. In one embodiment, the transmitting circuit 11 generates two transmission signals, and the two transmission signals have different bandwidths. For example, the bandwidth of the first transmission signal (one of the two transmission signals) is 50 MHz (i.e., corresponding to a narrow frequency band), and the bandwidth of the second transmission signal (the other of the two transmission signals) is greater than 500 MHz (i.e., corresponding to a wide frequency band). In one embodiment, the bandwidth of the first transmission signal is less than the bandwidth of the second transmission signal.

In one embodiment, the transmitting circuit 11 generates a transmission signal according to a first signal. The first signal has periodic variation. In one embodiment, the frequency of the first signal changes with time during its sweep period. For example, the first signal is a periodic sawtooth wave, triangular wave or other carrier signal applied to frequency modulated continuous wave (e.g., linear, geometric, or other chirp signal). During the period, the frequency of the first signal may gradually increase and/or gradually decrease. In another embodiment, the first signal is a pulse signal. For example, there is a peak or valley within a specific time interval (e.g., 2, 5, or 110 nanoseconds (ns)). At intervals of one period, a pulse signal is generated.

The transmitting antenna system 12 is used to transmit transmission signals. That is, the transmitted electromagnetic wave carries the transmission signal of the radar apparatus 10. In one embodiment, since the first signal has periodic variation, the transmission signal also has periodic variation accordingly. In one embodiment, for the pulse signal, the transmission signal is a spread spectrum signal with a flat frequency response in the spectrum. In one embodiment, the transmitting antenna system 12 is used to transmit two transmission signals with different bandwidths generated by the transmitting circuit 11.

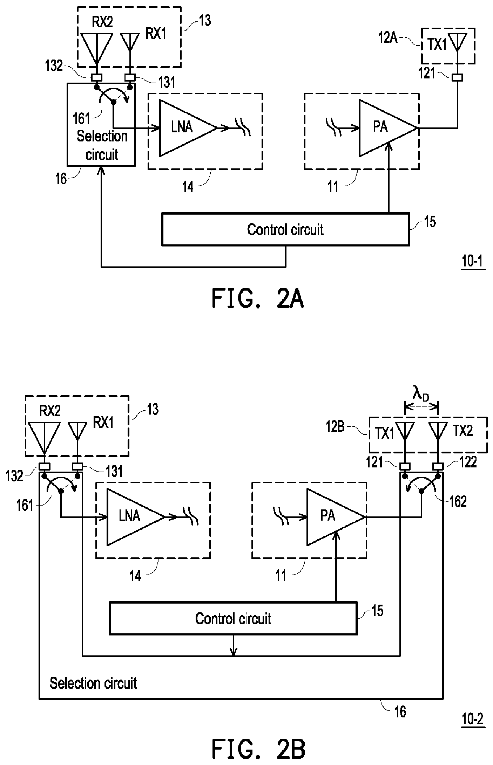

FIG. 2A is an element block diagram of a radar apparatus 10-1 according to an embodiment of the disclosure. Referring to FIG. 2A, the transmitting antenna system 12A of the radar apparatus 10-1 includes a transmitting antenna TX1. The transmitting circuit 11 includes an amplifier PA. The amplifier PA is coupled to the transmitting antenna TX1.

In one embodiment, the operating frequency band of the transmitting antenna TX1 may, for example, match the frequency bands of two transmission signals with different bandwidths generated by the transmitting circuit 11, such as matching the frequency bands of 10.5 to 10.55 GHz (corresponding to narrow frequency band) and 7.5 to 8.5 GHz (corresponding to wide frequency band). In one embodiment, the operating frequency band of the transmitting antenna TX1 is required to at least match the narrower one of the two transmission signals with different bandwidths generated by the transmitting circuit 11, such as having an excellent matching effect for the frequency band from 10.5 to 10.55 GHz (corresponding to narrow frequency band) and having an acceptable matching effect for the frequency band of 7.5 to 8.5 GHz (corresponding to a wide frequency band).

In one embodiment, the type of antenna operating in narrow band and wide band may be dipole, loop, patch, log-periodic dipole array (LPDA), spiral, dish, printed or other types. Furthermore, the parameters of the above-mentioned type of antenna may be further designed to meet narrow band and wide band applications respectively.

In one embodiment, as shown in FIG. 2A, the radar apparatus 10-1 further includes a matching circuit 121. The matching circuit 121 is coupled between the transmitting antenna TX1 and the transmitting circuit 11. The matching circuit 121 is used to achieve impedance matching between the transmitting antenna TX1 and the transmitting circuit 11. The matching circuit 121 may include microstrips, inductors, capacitors or other electronic elements. In addition, by configuring the matching circuit 121, the transmitting antenna TX1 may be operated in a required frequency band range. For example, the matching circuit 121 may be designed to have excellent matching effect for the frequency band of 10.5 to 10.55 GHz (corresponding to the narrow frequency band), and to have acceptable matching effect for the frequency band of 7.5 to 8.5 GHz (corresponding to the wide frequency band).

It should be noted that, in order to operate or match a specified frequency band, the design of the transmitting antenna TX1 may also be varied. Users may adjust the design of the transmitting antenna TX1 according to actual requirements.

FIG. 2B is an element block diagram of a radar apparatus 10-2 according to another embodiment of the disclosure. Referring to FIG. 2B, the transmitting antenna system 12B of the radar apparatus 10-2 includes two transmitting antennas TX1 and TX2. The transmitting circuit 11 includes an amplifier PA. The amplifier PA is selectively connected to one of the two transmitting antennas TX1 and TX2.

In one embodiment, the distance λ_{D} between the transmitting antennas TX1 and TX2 is λ_{HB}/2, and λ_{HB} is the wavelength of whichever center frequency is higher between the transmission signal transmitted by the transmitting antenna TX1 and the transmission signal transmitted by the transmitting antenna TX2. For example, if the center frequency of the transmission signal transmitted by the transmitting antenna TX1 is 8 GHz, and the center frequency of the transmission signal transmitted by the transmitting antenna TX2 is 10 GHz, then the distance λ_{D} between the transmitting antennas TX1 and TX2 is (8 × 10⁸) / (10 × 10⁹) = 8 × 10⁻² meters. In this embodiment, it is assumed that the center frequency corresponding to the transmission signal of the narrow frequency band is higher, and the center frequency of the transmission signal corresponding to the wide frequency band is lower.

In one embodiment, two transmitting antennas TX1 and TX2 form an antenna array. In an embodiment, each transmitting antenna TX1 and TX2 may correspond to an antenna port.

In one embodiment, the operating frequency bands of the transmitting antennas TX1 and TX2 may, for example, match the frequency bands of two transmission signals with different bandwidths generated by the transmitting circuit 11. For example, matching the frequency bands of 10.5 to 10.55 GHz (corresponding to narrow frequency band) and 7.5 to 8.5 GHz (corresponding to wide frequency band). In one embodiment, the operating frequency bands of the transmitting antennas TX1 and TX2 are required to at least match the narrower one of the two transmission signals with different bandwidths generated by the transmitting circuit 11, such as having an excellent matching effect for the frequency band from 10.5 to 10.55 GHz (corresponding to narrow frequency band) and having an acceptable matching effect for the frequency band of 7.5 to 8.5 GHz (corresponding to a wide frequency band).

In one embodiment, in the same detection mode, the bandwidth of the transmission signal transmitted by the transmitting antenna TX1 is the same as the bandwidth of the transmission signal transmitted by the transmitting antenna TX2.

For the implementation of the antenna, reference may be made to the foregoing description, and is not repeated herein.

In one embodiment, as shown in FIG. 2B, the radar apparatus 10-2 further includes matching circuits 121 and 122. The matching circuit 121 is coupled between the transmitting antenna TX1 and the transmitting circuit 11. The matching circuit 121 is used to achieve impedance matching between the transmitting antenna TX1 and the transmitting circuit 11. The matching circuit 122 is coupled between the transmitting antenna TX2 and the transmitting circuit 11. The matching circuit 122 is used to achieve impedance matching between the transmitting antenna TX2 and the transmitting circuit 11.

The matching circuits 121 and 122 may include microstrips, inductors, capacitors or other electronic elements. In addition, by configuring the matching circuits 121 and 122, the transmitting antennas TX1 and TX2 may be respectively operated in required frequency band ranges. For example, the matching circuits 121 and 122 may be designed to have excellent matching effect for the frequency band of 10.5 to 10.55 GHz (corresponding to the narrow frequency band), and to have acceptable matching effect for the frequency band of 7.5 to 8.5 GHz (corresponding to the wide frequency band).

In one embodiment, the matching bandwidth of the matching circuit 121 is the same as the matching bandwidth of the matching circuit 122.

In one embodiment, the specifications, operating frequency bands and/or sizes of the transmitting antennas TX1 and TX2 are the same or substantially the same.

It should be noted that, in order to operate or match a specified frequency band, the designs of the transmitting antennas TX1 and TX2 may also be varied. Users may adjust the designs of the transmitting antennas TX1 and TX2 according to actual requirements.

Referring to FIG. 1, the receiving antenna system 13 is used to receive reflected signals. The radar apparatus 10 may transmit transmission signals to an external object (e.g., people, vehicle, wall, or building) through the transmitting antenna system 12. Then, the radar apparatus 10 may receive reflected signals reflected from the external object through the receiving antenna system 13. The reflected signal is generated when the transmission signal is reflected by the external object.

In one embodiment, the receiving antenna system 13 receives two types of reflected signals, and the two types of reflected signals have different bandwidths. For example, the bandwidth of the first reflected signal (one of the two reflected signals) is 50 MHz (i.e., corresponding to a narrow frequency band), and the bandwidth of the second reflected signal (one of the two reflected signals) is greater than 500 MHz, such as 1 GHz (i.e., corresponding to a wide frequency band). In one embodiment, the bandwidth of the first reflected signal is less than the bandwidth of the second reflected signal.

Referring to FIG. 2A and FIG. 2B, the receiving antenna system 13 of the radar apparatuses 10-1 and 10-2 includes two receiving antennas RX1 and RX2.

In one embodiment, two receiving antennas RX1 and RX2 form an antenna array. In an embodiment, each receiving antenna RX1 and RX2 may correspond to an antenna port.

In one embodiment, the operating frequency bands of the two receiving antennas RX1 and RX2 respectively match the frequency bands of two receiving signals with different bandwidths. For example, the receiving antenna RX1 is matched to a frequency band of 10.5 to 10.55 GHz (corresponding to a narrow frequency band), and the receiving antenna RX2 is matched to a frequency band of 7.5 to 8.5 GHz (corresponding to a wide frequency band).

In one embodiment, the bandwidth of the reflected signal received by the receiving antenna RX1 is less than the bandwidth of the reflected signal received by the receiving antenna RX2. For example, the frequency band of the reflected signal received by the receiving antenna RX1 is 10.5 to 10.55 GHz (corresponding to the narrow frequency band), and the frequency band of the reflected signal received by the receiving antenna RX2 is 7.5 to 8.5 GHz (corresponding to the wide frequency band).

For the implementation of the antenna, reference may be made to the foregoing description, and is not repeated herein.

In one embodiment, as shown in FIG. 2A and FIG. 2B, the radar apparatus 10-2 further includes matching circuits 131 and 132. The matching circuit 131 is coupled between the receiving antenna RX1 and the receiving circuit 14. The matching circuit 131 is used to achieve impedance matching between the receiving antenna RX1 and the receiving circuit 14. The matching circuit 132 is coupled between the receiving antenna RX2 and the receiving circuit 14. The matching circuit 132 is used to achieve impedance matching between the receiving antenna RX2 and the receiving circuit 14.

The matching circuits 131 and 132 may include microstrips, inductors, capacitors or other electronic elements. In addition, by configuring the matching circuits 131 and 132, the receiving antennas RX1 and RX2 may be respectively operated in required frequency band ranges. For example, the matching circuit 131 may be designed to have excellent matching effect for the frequency band of 10.5 to 10.55 GHz (corresponding to the narrow frequency band), and the matching circuit 132 may be designed to have excellent matching effect for the frequency band of 7.5 to 8.5 GHz (corresponding to the wide frequency band).

In one embodiment, the matching bandwidth of the matching circuit 131 is less than the matching bandwidth of the matching circuit 132. For example, the matching bandwidth of the matching circuit 131 is 50 MHz, and the matching bandwidth of the matching circuit 132 is at least 500 MHz.

In one embodiment, referring to FIG. 2A, the transmitting antenna TX1 is required to transmit the first transmission signal and the second transmission signal with different bandwidths, and the matching circuit 121 is required to enable the transmitting antenna TX1 to operate in frequency bands with different bandwidths. However, the receiving antenna RX1 is only required to receive the first reflected signal of, for example, a narrow frequency band, and the matching circuit 131 is only required to enable the receiving antenna RX1 to operate in the frequency band of the first reflected signal. Therefore, the matching bandwidth of the matching circuit 121 is greater than the matching bandwidth of the matching circuit 131. For example, the matching frequency band of the matching circuit 131 is 10.5 to 10.55 GHz, so the matching bandwidth of the matching circuit 131 is, for example, 50 MHz, and the matching bandwidth of the matching circuit 121 is at least greater than the bandwidth range covered by 10.5 to 10.55 GHz, such as greater than 50 MHz.

In one embodiment, referring to FIG. 2B, the transmitting antenna TX1 is required to transmit the first transmission signal and the second transmission signal with different bandwidths, and the matching circuit 121 is required to enable the transmitting antenna TX1 to operate in frequency bands with different bandwidths. However, the receiving antenna RX1 is only required to receive the first reflected signal of, for example, a narrow frequency band, and the matching circuit 131 is only required to enable the receiving antenna RX1 to operate in the frequency band of the first reflected signal. Therefore, the matching bandwidth of the matching circuit 121 is greater than the matching bandwidth of the matching circuit 131. For example, the matching frequency band of the matching circuit 131 is 10.5 to 10.55 GHz, so the matching bandwidth of the matching circuit 131 is, for example, 50 MHz, and the matching bandwidth of the matching circuit 121 is at least greater than the bandwidth range covered by 10.5 to 10.55 GHz, such as greater than 50 MHz. In addition, the transmitting antenna TX2 is required to transmit the first transmission signal and the second transmission signal with different bandwidths, and the matching circuit 122 is required to enable the transmitting antenna TX2 to operate in frequency bands with different bandwidths. However, the receiving antenna RX1 is only required to receive the first reflected signal of, for example, a narrow frequency band, and the matching circuit 131 is only required to enable the receiving antenna RX1 to operate in the frequency band of the first reflected signal. Therefore, the matching bandwidth of the matching circuit 122 is greater than the matching bandwidth of the matching circuit 131. For example, the matching frequency band of the matching circuit 131 is 10.5 to 10.55 GHz, so the matching bandwidth of the matching circuit 131 is, for example, 50 MHz, and the matching bandwidth of the matching circuit 122 is at least greater than the bandwidth range covered by 10.5 to 10.55 GHz, such as greater than 50 MHz.

In one embodiment, the size of the receiving antenna RX1 is smaller than the size of the receiving antenna RX2. Taking patch antennas as an example, due to resonant modes, impedance matching, coupling structures and/or other factors, the size of the antenna suitable for low-frequency signals are larger than the size of the antenna suitable for high-frequency signals. In this embodiment, the first reflected signal with narrow frequency band is, for example, a high-frequency signal, and the second reflected signal with wide frequency band is, for example, a low-frequency signal. Therefore, in this embodiment, assuming that the receiving antenna RX1 for receiving the first reflected signal is designed for a narrow frequency band, and the receiving antenna RX2 for receiving the second reflected signal is designed for a wide frequency band, then the size of the receiving antenna RX1 is smaller than the size of the receiving antenna RX2. However, in other embodiments, it is also possible that the first reflected signal with narrow frequency band is, for example, a low-frequency signal, and the second reflected signal with wide frequency band is, for example, a high-frequency signal. In this way, the receiving antenna RX1 that receives the first reflected signal is designed for a narrow frequency band, and the receiving antenna RX2 that receives the second reflected signal is designed for a wide frequency band, then the size of the receiving antenna RX1 is larger than the size of the receiving antenna RX2.

However, the size of antennas suitable for low-frequency signals may be reduced through multi-mode, parasitic, slot structure or other technologies. Therefore, the size comparison of the receiving antennas RX1 and RX2 may vary depending on the specific embodiment.

Referring to FIG. 1, the receiving circuit 14 is used to generate an internal signal based on the radio frequency signal and the first signal. Two reflected signals with different bandwidths respectively received by the two receiving antennas RX1 and RX2 may form radio frequency signals, which will be described in detail later. For the introduction of the first signal, reference may be made to the foregoing description, and is not repeated herein.

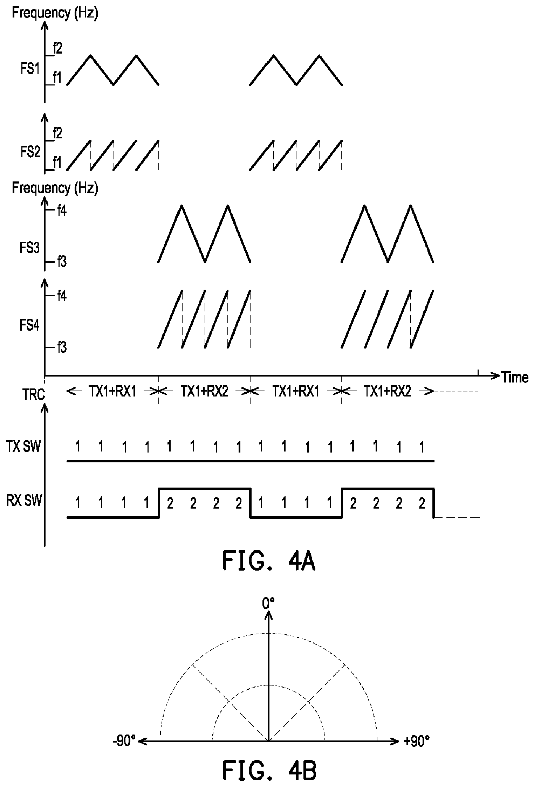

The control circuit 15 is coupled to the transmitting circuit 11. The control circuit 15 is used to generate one or more control signals. The one or more control signals change corresponding to the period of the first signal. For example, the control signal may be set as the second signal or the third signal, and the difference between the two signals is voltage, current and/or digital encoding. The first signal is a periodic chirp signal. The period of the combination of one or more chirp signals may be used as the period of the first signal. In a certain period of the first signal, the control signal is the second signal (e.g., high level, referring to the situation where the control signal RX SW in FIG. 4A is encoded as "2"); in another period of the first signal, the control signal is the third signal (e.g., low level, referring to the situation where the control signal RX SW in FIG. 4A is encoded as "1"). Therefore, in different periods of the first signal, the control signal is different. It should be noted that the voltage, current and/or digital encoding of the control signal may be changed according to actual requirements. In addition, the switching or changing time point of the control signal is, for example, at the junction of two periods of the first signal, which will be described in detail in subsequent embodiments.

The selection circuit 16 is coupled to the transmitting circuit 11, the transmitting antenna system 12, the receiving antenna system 13, the receiving circuit 14, and the control circuit 15.

In one embodiment, the selection circuit 16 is used to selectively connect one of the receiving antennas. Taking FIG. 2A and FIG. 2B as an example, the selection circuit 16 of the radar apparatuses 10-1 and 10-2 includes a switching circuit 161. The switching circuit 161 may be composed of one or more multiplexers, switches and other electrical elements. The receiving circuit 14 further includes a low noise amplifier LNA. The low noise amplifier LNA is coupled to the output end of the switching circuit 161.

Referring to FIG. 2A and FIG. 2B, the matching circuit 131 is coupled between the switching circuit 161 of the selection circuit 16 and the receiving antenna RX1, and the matching circuit 132 is coupled between the switching circuit 161 of the selection circuit 16 and the receiving antenna RX2.

In one embodiment, the switching circuit 161 may switch between the two receiving antennas RX1 and RX2 to transmit the reflected signals respectively received by the two receiving antennas RX1 and RX2 to the receiving circuit 14.

In one embodiment, the selection circuit 16 is used to selectively connect one of the transmitting antennas. Taking FIG. 2B as an example, the selection circuit 16 of the radar apparatus 10-2 further includes a switching circuit 162. The switching circuit 162 may be composed of one or more multiplexers, switches and other electrical elements. The matching circuit 121 is coupled between the switching circuit 162 of the selection circuit 16 and the transmitting antenna TX1, and the matching circuit 122 is coupled between the switching circuit 162 of the selection circuit 16 and the transmitting antenna TX2.

In one embodiment, the switching circuit 162 may switch between the two transmitting antennas TX1 and TX2 to transmit the transmission signal generated by the transmitting circuit 11 to the transmitting antenna TX1 or the transmitting antenna TX2.

In one embodiment, the selection circuit 16 may also disable the unused transmitting antennas among the transmitting antennas TX1 and TX2, and/or disable the unused receiving antennas among the receiving antennas RX1 and RX2, to achieve the purpose of selective connection.

It should be noted that in the embodiment of FIG. 2A, the transmitting antenna system 12A includes a transmitting antenna TX1. The transmitting circuit 11 generates one of the two transmission signals according to one or more control signals provided by the control circuit 15, and then the transmitting antenna TX1 transmits one of the two transmission signals. Therefore, there is no need to select a transmitting antenna in the embodiment of FIG. 2A, and the transmitting antenna system 12A in the embodiment of FIG. 2A may not be coupled to the selection circuit 16.

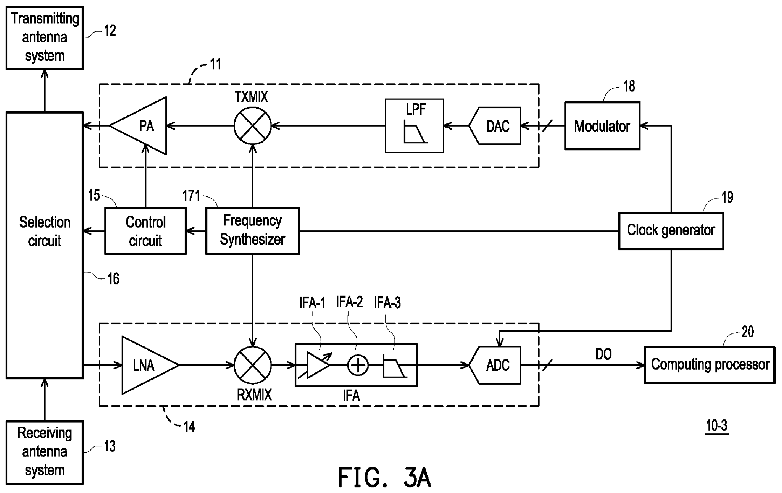

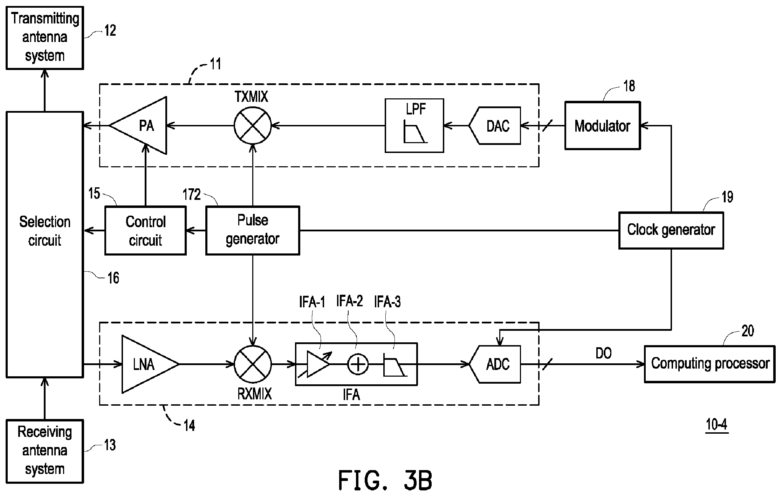

The detailed hardware architecture of the radar apparatus 10 will be described in more detail below with reference to FIG. 3A and FIG. 3B.

FIG. 3A is an element block diagram of a radar apparatus 10-3 according to an embodiment of the disclosure. Referring to FIG. 3A, the radar apparatus 10-3 includes a transmitting circuit 11, a transmitting antenna system 12, a receiving antenna system 13, a receiving circuit 14, a control circuit 15, and a selection circuit 16. In addition, the radar apparatus 10-3 may further include a frequency synthesizer 171, a modulator 18, a clock generator 19, and a computing processor 20.

The transmitting circuit 11 includes an amplifier PA and a mixer TXMIX. The amplifier PA is coupled to the mixer TXMIX. The amplifier PA is used to amplify the signal (e.g., the output signal of the mixer TXMIX). The mixer TXMIX is used to mix signals to generate transmission signals. In addition, the transmitting circuit 11 may also include a filter LPF and a digital-to-analog converter DAC.

For the introduction of the transmitting antenna system 12, reference may be made to the description of the transmitting antenna system 12 of FIG. 1 and the description of the transmitting antenna system 12B of FIG. 2B respectively. For the introduction to the receiving antenna system 13, reference may be made to the description of the receiving antenna system 13 in FIG. 1, FIG. 2A, and FIG. 2B respectively, and the description is not repeated herein.

The receiving circuit 14 includes a low noise amplifier LNA and a mixer RXMIX. The low noise amplifier LNA is coupled to the mixer RXMIX. The low noise amplifier LNA is used to amplify signals (e.g., reflected signals). The mixer RXMIX is used to mix signals (e.g., the output signal of a low noise amplifier LNA) to generate an intermediate frequency signal. In addition, the receiving circuit 14 may also include an intermediate frequency amplifier circuit IFA and an analog-to-digital converter ADC.

For the description of the control circuit 15 and the selection circuit 16, reference may be made to the descriptions of FIG. 1, FIG. 2A and FIG. 2B respectively, which are not repeated herein.

In this embodiment, the control circuit 15 is further coupled to the amplifier PA. In one embodiment, the amplifier PA sets the output power according to one or more control signals generated by the control circuit 15.

The frequency synthesizer 171 is coupled to the transmitting circuit 11 and the receiving circuit 14. In one embodiment, the control circuit 15 is coupled to the transmitting circuit 11 through the frequency synthesizer 171. In another embodiment, the control circuit 15 is directly connected to the transmitting circuit 11. The frequency synthesizer 171 is used to generate a first signal and provide the first signal to the transmitting circuit 11, the receiving circuit 14, and the control circuit 15. At this time, the first signal is a continuous wave signal.

The modulator 18 may be implemented by an N-order (N is a positive integer greater than zero) oversampling modulator or an N-bit Nyquist frequency sampler.

The clock generator 19 is coupled to the frequency synthesizer 171, the modulator 18, and the analog-to-digital converter ADC. The clock generator 19 is used to generate a clock signal (or a local oscillation signal). The frequency synthesizer 171 generates a first signal with a period according to the clock signal. The control circuit 15 synchronizes the first signal according to the clock signal. Furthermore, the above-mentioned situation of synchronizing the first signal may be regarded as that the duration of one or more control signals remaining unchanged and the period of the first signal has a fixed overlapping range. For example, the switching or changing period of the control signal may be made identical to the period of the first signal. Alternatively, the switching or changing time point of the control signal may be synchronized with the start point or end point of the period of the first signal, with a predetermined time shift forward or backward. Alternatively, the switching or changing time point of the control signal may be synchronized with the start point or end point of the period of the first signal.

The modulator 18 oversamples and modulates the clock signal to generate a sine wave-like digital signal, and drives a digital-to-analog converter DAC to generate an analog sine wave signal. Then, the filter LPF performs low-pass filtering on the analog sine wave signal to form a sine wave signal that is input to the mixer TXMIX. The mixer TXMIX mixes (e.g., an up conversion) the sine wave signal according to the first signal (e.g., continuous wave signal) from the frequency synthesizer 171 to form a transmission signal.

The transmission signal is transmitted through the transmitting antenna in the transmitting antenna system 12. Taking FIG. 2A as an example, the transmitting antenna TX1 transmits a transmission signal. Taking FIG. 2B as an example, the transmission signal is transmitted through the transmitting antenna TX1 or TX2 turned on/switched by the switching circuit 162.

On the other hand, the reflected signal is received through the receiving antenna system 13. Taking FIG. 2A and FIG. 2B as an example, the reflected signal is received through the receiving antenna RX1 or RX2 that is turned on/switched by the switching circuit 161. The low noise amplifier LNA amplifies the reflected signal received by the receiving antenna RX1 or RX2, and the mixer RXMIX mixes (e.g., a down conversion) the amplified signal according to the first signal (e.g., a continuous wave signal) generated by the frequency synthesizer 171 to generate an intermediate frequency signal.

The intermediate frequency amplifier circuit IFA includes the intermediate frequency amplifier IFA-1, the correction circuit IFA-2 (optional), and the filter IFA-3. The intermediate frequency amplifier IFA-1 filters the intermediate frequency signal and amplifies the signal in a specific frequency band. Then, the signal in the desired frequency band is filtered through the filter, and is converted into a baseband signal DO (e.g., a baseband digital signal) through an analog-to-digital converter ADC. The correction circuit IFA-2 may be a summing circuit, and may add the intermediate frequency signal and the inverted sine wave signal (i.e., subtract the analog sine wave signal generated by the digital-to-analog converter DAC from the intermediate frequency signal). The correction circuit IFA-2 may correct flicker noise, DC offset, local oscillator leakage and other problems encountered by the reflected signal based on the sine wave signal. In other embodiments, the position of the correction circuit IFA-2 may be different. For example, the position is located before the intermediate frequency amplifier IFA-1 (i.e., coupled between the mixer RXMIX and the intermediate frequency amplifier IFA-1), or set after the filter IFA-3 (i.e., coupled between the filter IFA-3 and the analog-to-digital converter ADC).

The computing processor 20 is coupled to the receiving circuit 14. Referring to FIG. 3A and taking FIG. 2A and FIG. 2B as an example, the operation processor 20 is coupled to the analog-to-digital converter ADC in the receiving circuit 14 and receives the baseband signal DO. The computing processor 20 may be a chip, a processor, a microcontroller, an application-specific integrated circuit (ASIC), or any type of digital circuit.

FIG. 3B is an element block diagram of a radar apparatus 10-4 according to another embodiment of the disclosure. Referring to FIG. 3B, the radar apparatus 10-4 includes a transmitting circuit 11, a transmitting antenna system 12, a receiving antenna system 13, a receiving circuit 14, a control circuit 15, and a selection circuit 16. In addition, the radar apparatus 10-4 may further include a pulse generator 172, a modulator 18, a clock generator 19, and a computing processor 20.

For the description of the transmitting circuit 11, the transmitting antenna system 12, the receiving antenna system 13, the receiving circuit 14, the control circuit 15, the selection circuit 16, the modulator 18, the clock generator 19, the filter LPF, the digital to analog converter DAC, the intermediate frequency amplifier circuit IFA, and the analog to digital converter ADC, reference may be made to the description of the same symbols in FIG. 3A, which are not repeated herein.

In this embodiment, the pulse generator 172 is coupled to the transmitting circuit 11 and the receiving circuit 14. The pulse generator 172 is used to generate a first signal and provide the first signal to the transmitting circuit 11, the receiving circuit 14, and the control circuit 15. At this time, the first signal is a pulse signal. In one embodiment, the control circuit 15 is coupled to the transmitting circuit 11 through the pulse generator 172. In another embodiment, the control circuit 15 is directly connected to the transmitting circuit 11, and the transmitting circuit 11 may generate a pulse signal by turning on the signal output and turning off the signal output. In this embodiment, the clock generator 19 is coupled to the pulse generator 172, the modulator 18 and the analog-to-digital converter ADC. The clock generator 19 is used to generate a clock signal (or a local oscillation signal). The pulse generator 172 generates a first signal with a period according to the clock signal. The control circuit 15 synchronizes the first signal according to the clock signal. Furthermore, the above-mentioned situation of synchronizing the first signal may be regarded as that the duration of one or more control signals remaining unchanged and the period of the first signal has a fixed overlapping range. For example, the switching or changing period of the control signal may be made identical to the period of the first signal. Alternatively, the switching or changing time point of the control signal may be synchronized with the start point or end point of the period of the first signal, with a predetermined time shift forward or backward. Alternatively, the switching or changing time point of the control signal may be synchronized with the start point or end point of the period of the first signal.

The radar apparatuses 10, 10-1 to 10-4 may transmit transmission signals to the external object O (also referred to as a target) through the transmitting antenna system 12. The receiving antenna system 13 receives the reflected signal reflected from the external object O. For example, the transmitting antenna TX1 or TX2 transmits a continuous wave signal or a pulse signal for a frame (corresponding to one or more periods). Based on the baseband signal of the receiving antenna RX1, the distance to the external object (corresponding to the position of the external object) may be obtained.

In one embodiment, a frame time includes multiple transmission and reception periods, which correspond to periods of the first signal and/or transmission signal.

For example, FIG. 4A is a schematic diagram of signal and antenna switching according to an embodiment of the disclosure. Referring to FIG. 4A, the first signal is, for example, a continuous wave signal and is expressed in the form of a chirp signal (frequency changes with time). In this embodiment, the period of the first signal is, for example, the frequency variation period of the first signal. The continuous wave signal mixes the sine wave signal and forms a transmission signal accordingly. The first signal FS1 of the example is presented as a triangular wave with frequency variation. Within a sweep period of a triangular wave, its frequency increases/rises with time in the rising section, and its frequency decreases/falls with time in the falling section. The frequency of the first signal FS1 may be between frequency f1 and frequency f2. Alternatively, the first signal FS2 of another example is presented as a sawtooth wave with frequency variation. Within a sweep period of a sawtooth wave, its frequency increases/rises with time in the rising section, and its frequency directly drops to the wave trough in the falling section. The frequency of the first signal FS2 may be between frequency f1 and frequency f2. In this embodiment, one frame time includes, for example, two transmission and reception periods. Each transmission and reception period may include, for example, two periods of the first signal FS1 (or the first signal FS3), or may include four periods of the first signal FS2 (or the first signal FS4). That is, each transmission and reception period is, for example, two sweep periods of a triangular wave or four sweep periods of a sawtooth wave. In this way, one frame time includes, for example, two periods of the first signal FS1 plus two periods of the first signal FS3. Alternatively, one frame time, for example, includes four periods of the first signal FS2 plus four periods of the first signal FS4. However, there may be other variations in the ratio of the number of transmission and reception periods to the sweep periods.

In addition, the transmitting circuit 11 may also generate transmission signals of different bandwidths corresponding to the first signals of different bandwidths. The first signal FS3 of the example is presented as a triangular wave with frequency variation. The frequency of the first signal FS3 may be between frequency f3 and frequency f4. The frequency band range from frequency f3 to frequency f4 is greater than the frequency band range from frequency f1 to frequency f2. Alternatively, the first signal FS4 of another example is presented as a sawtooth wave with frequency variation.

In one embodiment, referring to FIG. 2A, the transmitting antenna TX1 transmits a transmission signal in each transmission and reception period of the frame time. Taking FIG. 4A as an example, the control signal TX SW for the transmitting antenna TX1 encoded as "1" means that only the transmitting antenna TX1 is turned on/selected/used (the transmission signal is only transmitted through the transmitting antenna TX1). It should be noted that since only the transmitting antenna TX1 is used during multiple frame times, the control signal TX SW may be ignored.

In one embodiment, referring to FIG. 2A, the transmitting circuit 11 is used to select and generate only one of the two transmission signals with different bandwidths in each transmission and reception period during the frame time according to one or more control signals, so that the transmitting antenna TX1 only selects to transmit one of the two transmission signals with different bandwidths in each transmission and reception period during the frame time. That is, within one transmission and reception period, the transmitting circuit 11 only generates a transmission signal corresponding to one bandwidth, and the transmitting antenna TX1 transmits such transmission signal. In another transmission and reception period, the transmitting circuit 11 only generates a transmission signal corresponding to another bandwidth, and the transmitting antenna TX1 transmits such transmission signal.

In one embodiment, referring to FIG. 4A, taking the first signals FS1 and FS3 of triangular waves as an example, in the first transmission and reception period (corresponding to two periods of the first signal FS1), the transmitting circuit 11 generates a transmission signal (e.g., a first transmission signal) corresponding to the first signal FS1 (corresponding to the first group of triangular waves counted from the left of the first row in FIG. 4A) between frequency f1 and frequency f2. In the second transmission and reception period (corresponding to two periods of the first signal FS3), the transmitting circuit 11 generates a transmission signal (e.g., a second transmission signal) corresponding to the first signal FS3 (corresponding to the first group of triangular waves counted from the left of the third row in FIG. 4A) between frequency f3 and frequency f4. In this embodiment, it may be considered that the control signal TX SW controls the transmitting circuit 11 to generate two transmission signals corresponding to different bandwidths of the first signal FS1 or FS3. In addition, during these transmission and reception periods, the two transmission signals are transmitted at different times through the transmitting antenna TX1.

In another embodiment, the first signals FS2 and FS4 of sawtooth waves in FIG. 4A may be adopted as an example, in the first transmission and reception period (corresponding to four periods of the first signal FS2), the transmitting circuit 11 generates a transmission signal (e.g., a first transmission signal) corresponding to the first signal FS2 (corresponding to the first group of sawtooth waves counted from the left of the second row in FIG. 4A) between frequency f1 and frequency f2. In the second transmission and reception period (corresponding to four periods of the first signal FS4), the transmitting circuit 11 generates a transmission signal (e.g., a second transmission signal) corresponding to the first signal FS4 (corresponding to the first group of sawtooth waves counted from the left of the fourth row in FIG. 4A) between frequency f3 and frequency f4. In this embodiment, it may be considered that the control signal TX SW controls the transmitting circuit 11 to generate two transmission signals corresponding to different bandwidths of the first signal FS2 or FS4. In addition, during these transmission and reception periods, the two transmission signals are transmitted at different times through the transmitting antenna TX1.

In one embodiment, referring to FIG. 2A, the selection circuit 16 (e.g., through the switching circuit 161) is used to select only the receiving antenna RX1 to receive the first reflected signal or select only the receiving antenna RX2 to receive the second reflected signal in each transmission and reception period during the frame time according to one or more control signals. That is, the switching circuit 161 of the selection circuit 16 only turns on/selects/uses one receiving antenna (i.e., selects the receiving antenna RX1 or RX2). That is, the selection circuit 16 interrupts the signals transmitted to the receiving circuit 14 by other receiving antennas.

Taking FIG. 4A as an example, the control signal RX SW for the receiving antennas RX1 and RX2 encoded as "1" means that only the receiving antenna RX1 is turned on/selected/used (only the reflected signal from the receiving antenna RX1 is received by the receiving circuit 14 and the reflected signal from the receiving antenna RX2 to the receiving circuit 14 is interrupted), and encoded as "2" means that only the receiving antenna RX2 is turned on/selected/used (only the reflected signal from the receiving antenna RX2 is received by the receiving circuit 14 and the reflected signal from the receiving antenna RX1 to the receiving circuit 14 is interrupted).

In one embodiment, referring to FIG. 4A, taking the reflected signals corresponding to the first triangular wave signals FS1 and FS3 as an example, in the first transmission and reception period, the receiving antenna RX1 receives the reflected signal (e.g., the first reflected signal) corresponding to the first signal FS1. In the second transmission and reception period, the receiving antenna RX2 receives the reflected signal (e.g., the second reflected signal) corresponding to the first signal FS3. In this embodiment, it may be considered that the control signal RX SW controls the selection of the receiving antenna RX1 or RX2. However, in other embodiments, the same control signal may be used to control the selection of generating the transmission signal corresponding to the first signal FS1 or FS3 and the selection of the receiving antenna RX1 or RX2.

In another embodiment, the reflected signals corresponding to the sawtooth wave first signals FS2 and FS4 shown in FIG. 4A may be adopted as an example. In the first transmission and reception period, the receiving antenna RX1 receives the reflected signal (e.g., the first reflected signal) corresponding to the first signal FS2. In the second transmission and reception period, the receiving antenna RX2 receives the reflected signal (e.g., the second reflected signal) corresponding to the first signal FS4. In this embodiment, it may be considered that the control signal RX SW controls the selection of the receiving antenna RX1 or RX2. However, in other embodiments, the same control signal may be used to control the selection of generating the transmission signal corresponding to the first signal FS2 or FS4 and the selection of the receiving antenna RX1 or RX2.

In one embodiment, the transmitting antenna TX1 and the receiving antenna (receiving antenna RX1 or RX2) that are turned on/selected/used in a transmission and reception period form a transmitting and receiving combination.

"TX1+RX1" represents the transmitting and receiving combination TRC of the transmitting antenna TX1 and the receiving antenna RX1; "TX1 +RX2" represents the transmitting and receiving combination TRC of the transmitting antenna TX1 and the receiving antenna RX2.

In addition, the period of the signal corresponding to any code (e.g., "1" or "2") of the control signals TX SW and RX SW corresponds to the period of the first signal or the transmission signal. For example, two codes correspond to a first signal FS1 of a triangular wave or to a first signal FS2 of a sawtooth wave. The switching time of two adjacent codes of the control signal RX SW is, for example, located at the starting point, final point, or end point of the period of the first signals FS1 and FS2. Alternatively, the switching time of two adjacent codes of the control signal RX SW may also be located at the starting point, final point, or end point of the period of the first signals FS1 and FS2 with a predetermined time shift forward or backward. As shown in FIG. 2A or FIG. 2B, the transmission signal is generated according to the control signal. Referring again to FIG. 3A and FIG. 3B, the control signal is generated according to the first signal generated by the frequency synthesizer 171 or the pulse generator 172, and the first signal is generated according to the clock signal provided by the clock generator 19. Therefore, the switching time point and period of the control signal may be synchronized with the first signal and the transmission signal.

In one embodiment, the first transmission signal and the first reflected signal generated corresponding to the reflection of the first transmission signal are used in the first detection mode, and the second transmission signal with different bandwidth and the second reflected signal generated corresponding to the reflection of the second transmission signal are used in the second detection mode. In addition, the detection power of the first detection mode is greater than the detection power of the second detection mode. The detection power may be referred to as radar transmission power, which refers to the power of the electromagnetic waves transmitted by the radar apparatuses 10, 10-1 to 10-4. The detection power may affect the detection range, range resolution and/or anti-interference ability of the radar apparatuses 10, 10-1 to 10-4. As explained above, the transmitting circuit 11 may generate two transmission signals with different bandwidths respectively. In one embodiment, the detection power used for the first transmission signal with a smaller bandwidth is greater than the detection power used for the second transmission signal with a larger bandwidth.

In one embodiment, the radar apparatuses 10, 10-1 to 10-4 are used to select and execute only one of the two detection modes in each transmission and reception period during the frame time according to one or more control signals. That is, only the first detection mode is selected to be executed in one transmission and reception period, and only the second detection mode is selected to be executed in another transmission and reception period. For example, in one transmission and reception period, only a first transmission signal with a smaller bandwidth is selected to be transmitted to execute the first detection mode, and in another transmission and reception period, only a second transmission signal with a larger bandwidth is selected to be transmitted to execute the second detection mode.

Taking FIG. 4A as an example, in the first transmission and reception period, the first detection mode corresponding to the first transmission signal (corresponding to the first signal FS1 or FS2 having a bandwidth from frequency f1 to frequency f2) is executed. In the second transmission and reception period, the second detection mode corresponding to the second transmission signal (corresponding to the first signal FS3 or FS4 having a bandwidth from frequency f3 to frequency f4) is executed.

In one embodiment, referring to FIG. 2A, FIG. 2B, FIG. 3A and FIG. 3B, the amplifier PA is used to output different powers in two detection modes according to one or more control signals. The output power of the amplifier PA is related to the detection power. The greater the output power of the amplifier PA, the greater the detection power, the smaller the output power of the amplifier PA, the smaller the detection power. In one embodiment, the power provided by the amplifier PA to the first transmission signal with a smaller bandwidth is greater than the power provided to the second transmission signal with a larger bandwidth.

Taking FIG. 4A as an example, in the first transmission and reception period, the transmitting circuit 11 generates a first transmission signal corresponding to the first signal FS1 or FS2 between frequency f1 and frequency f2, in which the amplifier PA outputs larger power. In the second transmission and reception period, the transmitting circuit 11 generates a second transmission signal corresponding to the first signal FS3 or FS4 between frequency f3 and frequency f4, in which the amplifier PA outputs smaller power.

It should be noted that the output power may still be adjusted due to antenna gain, poor matching, or other factors. For example, for narrow band applications, the output load may approach 50 ohms. However, for wide band applications, relatively higher output power is required to compensate for the losses due to lower gain and matching.

In one embodiment, referring to FIG. 2A, the low noise amplifier LNA included in the receiving circuit 14 amplifies the two reflected signals received by the receiving antennas RX1 and RX2. In addition, the low noise amplifier LNA provides corresponding gain and/or impedance matching according to the frequency band size of the reflected signal.

In one embodiment, the range resolution of the first detection mode is, for example, less than the range resolution of the second detection mode. Range resolution is the ability of a radar system to distinguish between multiple targets that approach at a radial distance. Range resolution mainly depends on the bandwidth of the transmission signal. The wider the bandwidth, the higher the range resolution. Taking FIG. 4A as an example, the range resolution of the first detection mode using the first transmission signal with a smaller bandwidth (corresponding to the bandwidth from frequency f1 to frequency f2) is less than the range resolution of the second detection mode using the second transmission signal with a larger bandwidth (corresponding to the bandwidth from frequency f3 to frequency f4).

Referring to FIG. 3A and FIG. 3B, the receiving circuit 14 is used to generate an internal signal (e.g., the above-mentioned baseband signal DO) according to the radio frequency signal and the first signal generated by the frequency synthesizer 171 or the pulse generator 172. This internal signal includes multiple internal sub-signals generated corresponding to multiple transmission and reception periods in the frame time. Taking FIG. 4A as an example, assuming that the frame includes two transmission and reception periods, the receiving circuit 14 may generate a first internal signal corresponding to the first transmission and reception period, and the receiving circuit 14 may generate a second internal signal corresponding to the second transmission and reception period.

In addition, the computing processor 20 is used to determine the spatial information of the external object according to these internal sub-signals. For a frame including two transmission and reception periods, the computing processor 20 may determine the spatial information of the external object according to the first internal signal and the second internal signal.

In one embodiment, the spatial information of the external object includes distance information. The computing processor 20 may obtain the spectrum information of the baseband signal DO corresponding to different internal signals through fast Fourier transform, discrete Fourier transform (DFT) or other time domain to frequency domain conversions. The amplitude of the spectrum information corresponds to the distance information. Taking the power spectrum diagram for spectrum information as an example, assuming that the reflected signal is reflected by an external object, each internal signal has a peak value at the position (or the distance from the external object) of the external object. If the peak value corresponding to any distance is greater than the amplitude threshold, it is determined that there is an external object, and the distance information is determined accordingly.

FIG. 4B is a schematic diagram of one-dimensional detection according to an embodiment of the disclosure. Referring to FIG. 2A, FIG. 4A and FIG. 4B, under the architecture of FIG. 2A (e.g., one transmitting antenna TX1 and two receiving antennas RX1, RX2), and operating under the switching of the transmitting and receiving combination TRC shown in FIG. 4A, distance information may be determined. However, this embodiment assumes that the detection field of view is 180 degrees as shown in FIG. 4B, and the angle information cannot be obtained. The angle information may be the direction or angle of the external object compared to the radar apparatus 10-1.

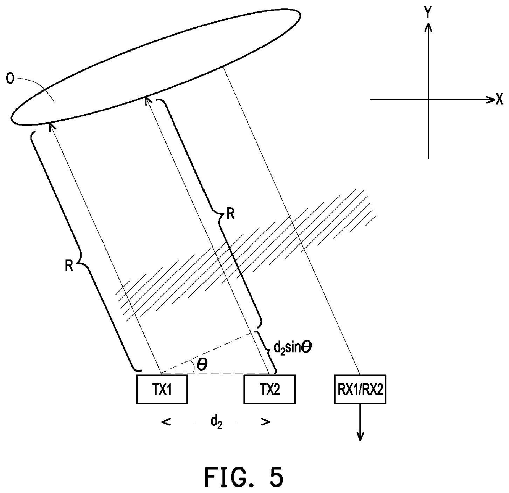

FIG. 5 is a schematic diagram of the angle of arrival θ according to another embodiment of the disclosure. Referring to FIG. 5, the radar apparatuses 10, 10-2 to 10-4 may transmit transmission signals to the external object O (also referred to as a target) through the transmitting antenna system 12. The transmitting antenna TX1, the transmitting antenna TX2, the receiving antenna RX1, and the receiving antenna RX2 are spatially arranged in a row along the same direction (e.g., the horizontal direction of the drawing), and the separation distance d₂ between the transmitting antenna TX1 and the transmitting antenna TX2 is the above-mentioned distance λ_{D} (e.g., half the wavelength of the transmission signal with a smaller bandwidth, that is, the above-mentioned λ_{HB}/2). Therefore, the distance between the transmitting antenna TX1 and the transmitting antenna TX2 to the external object O differs by d₂sinθ. The angle of arrival 8 is the angle of the external object O relative to the radar apparatus 10, 10-2 to 10-4 (can serve as angle information). R is the distance between the external object O and the transmitting antenna TX1 (can serve as distance information).

In one embodiment, the computing processor 20 may convert multiple reflected signals into spatial spectrum information to determine angle information. A peak value in the spatial spectrum information corresponds to angle information, and the spatial information includes angle information. The orientation information is, for example, the above-mentioned angle of arrival θ.

An angle of arrival (AoA) estimation algorithm is, for example, multiple signal classification algorithm (MUSIC), root-MUSIC algorithm, or estimation of signal parameters via rotational invariance techniques (ESPRIT) algorithm.

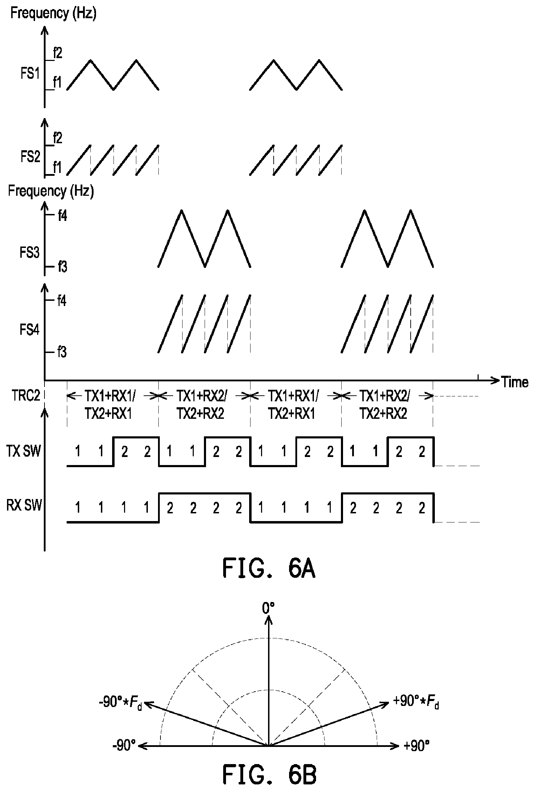

FIG. 6A is a schematic diagram of signal and antenna switching according to another embodiment of the disclosure. Referring to FIG. 6A, for the introduction of the first signals FS1 to FS4, reference may be made to the description of FIG. 4A, which is not repeated herein. It should also be noted that in the embodiment of FIG. 6A, one frame time includes, for example, four transmission and reception periods. Each transmission and reception period may include, for example, one period of the first signal FS1 (or the first signal FS3), or may include two periods of the first signal FS2 (or the first signal FS4). That is, each transmission and reception period is, for example, one sweep period of a triangular wave or two sweep periods of a sawtooth wave. In this way, one frame time includes, for example, two periods of the first signal FS1 plus two periods of the first signal FS3. Alternatively, one frame time, for example, includes four periods of the first signal FS2 plus four periods of the first signal FS4. However, there may be other variations in the ratio of the number of transmission and reception periods to the sweep periods.

In addition, the control signal TX SW for the transmitting antennas TX1 and TX2 encoded as "1" means that only the transmitting antenna TX1 is turned on/selected/used (the transmission signal is only transmitted through the transmitting antenna TX1 and the transmission signal transmitted by the transmitting circuit 11 to the transmitting antenna TX2 is interrupted), and encoded as "2" means that only the transmitting antenna TX2 is turned on/selected/used (the transmission signal is only transmitted through the transmitting antenna TX2 and the transmission signal transmitted by the transmitting circuit 11 to the transmitting antenna TX1 is interrupted).

On the other hand, the control signal RX SW for the receiving antennas RX1 and RX2 encoded as "1" means that only the receiving antenna RX1 is turned on/selected/used (only the reflected signal from the receiving antenna RX1 is received by the receiving circuit 14 and the reflected signal from the receiving antenna RX2 to the receiving circuit 14 is interrupted), and encoded as "2" means that only the receiving antenna RX2 is turned on/selected/used (only the reflected signal from the receiving antenna RX2 is received by the receiving circuit 14 and the reflected signal from the receiving antenna RX1 to the receiving circuit 14 is interrupted).

In one embodiment, referring to FIG. 2B, the selection circuit 16 (e.g., through the switching circuit 162) is used to select only the transmitting antenna TX1 to transmit one of the first transmission signal and the second transmission signal or select only the transmitting antenna TX2 to transmit one of the first transmission signal and the second transmission signal in each transmission and reception period during the frame time according to one or more control signals. Furthermore, in the first detection mode, within one transmission and reception period, the transmitting circuit 11 only generates a first transmission signal corresponding to one bandwidth, and the transmitting antenna TX1 transmits such first transmission signal. In another transmission and reception period, the transmitting circuit 11 also generates a first transmission signal, and the transmitting antenna TX2 transmits such first transmission signal. In the second detection mode, within one transmission and reception period, the transmitting circuit 11 only generates a second transmission signal corresponding to another bandwidth, and the transmitting antenna TX1 transmits such second transmission signal. In another transmission and reception period, the transmitting circuit 11 also generates a second transmission signal, and the transmitting antenna TX2 transmits such second transmission signal. In addition, the first detection mode and the second detection mode may be executed alternately. That is, in this embodiment, for example, four transmission and reception periods may be included. In each respective transmission and reception periods, the following actions are executed: "transmitting the first transmission signal via transmitting antenna TX1," "transmitting the first transmission signal via transmitting antenna TX2," "transmitting the second transmission signal via transmitting antenna TX1," and "transmitting the second transmission signal via transmitting antenna TX2."

In one embodiment, referring to FIG. 6A, taking the first signals FS1 and FS3 of triangular waves as an example, in the first and second transmission and reception periods (corresponding to two periods of the first signal FS1), the transmitting circuit 11 generates a transmission signal (e.g., a first transmission signal) corresponding to the first signal FS1 (corresponding to the first group of triangular waves counted from the left of the first row in FIG. 6A) between frequency f1 and frequency f2. In the first transmission and reception period (corresponding to the first period of the first signal FS1), the first transmission signal is transmitted by the transmitting antenna TX1, and in the second transmission and reception period (corresponding to the second period of the first signal FS1), the first transmission signal is transmitted by the transmitting antenna TX2. In the third and fourth transmission and reception periods (corresponding to two periods of the first signal FS3), the transmitting circuit 11 generates a transmission signal (e.g., a second transmission signal) corresponding to the first signal FS3 (corresponding to the first group of triangular waves counted from the left of the third row in FIG. 6A) between frequency f3 and frequency f4. In the third transmission and reception period (corresponding to the first period of the first signal FS3), the second transmission signal is transmitted by the transmitting antenna TX1, and in the fourth transmission and reception period (corresponding to the second period of the first signal FS3), the second transmission signal is transmitted by the transmitting antenna TX2. In this embodiment, it may be considered that the control signal TX SW controls the transmitting circuit 11 to generate two transmission signals corresponding to different bandwidths of the first signal FS1 or FS3, and controls the selection of the transmitting antenna TX1 or the transmitting antenna TX2 to transmit one of the two transmission signals.

In another embodiment, the first signals FS2 and FS4 of sawtooth waves in FIG. 6A may be adopted as an example, in the first and second transmission and reception periods (corresponding to four periods of the first signal FS2), the transmitting circuit 11 generates a transmission signal (e.g., a first transmission signal) corresponding to the first signal FS2 (corresponding to the first group of sawtooth waves counted from the left of the second row in FIG. 6A) between frequency f1 and frequency f2. In the first transmission and reception period (corresponding to the first and second periods of the first signal FS1), the first transmission signal is transmitted by the transmitting antenna TX1, and in the second transmission and reception period (corresponding to the third and fourth periods of the first signal FS1), the first transmission signal is transmitted by the transmitting antenna TX2. In the third and fourth transmission and reception periods (corresponding to four periods of the first signal FS4), the transmitting circuit 11 generates a transmission signal (e.g., a second transmission signal) corresponding to the first signal FS4 (corresponding to the first group of sawtooth waves counted from the left of the fourth row in FIG. 6A) between frequency f3 and frequency f4. In the third transmission and reception period (corresponding to the first and second periods of the first signal FS4), the second transmission signal is transmitted by the transmitting antenna TX1, and in the fourth transmission and reception period (corresponding to the third and fourth periods of the first signal FS4), the second transmission signal is transmitted by the transmitting antenna TX2. In this embodiment, it may be considered that the control signal TX SW controls the transmitting circuit 11 to generate two transmission signals corresponding to different bandwidths of the first signal FS2 or FS4, and controls the selection of the transmitting antenna TX1 or the transmitting antenna TX2 to transmit one of the two transmission signals.

In one embodiment, referring to FIG. 2B, the selection circuit 16 (e.g., through the switching circuit 161) is used to select only the receiving antenna RX1 to receive the first reflected signal or select only the receiving antenna RX2 to receive the second reflected signal in each transmission and reception period during the frame time according to one or more control signals. That is, the switching circuit 161 of the selection circuit 16 only turns on/selects/uses one receiving antenna (i.e., selects the receiving antenna RX1 or RX2). That is, the selection circuit 16 interrupts the signals transmitted to the receiving circuit 14 by other receiving antennas.

In one embodiment, referring to FIG. 6A, taking the reflected signals corresponding to the first triangular wave signals FS1 and FS3 as an example, in the first and second transmission and reception periods, the receiving antenna RX1 receives the reflected signal (e.g., the first reflected signal) corresponding to the first signal FS1. In the third and fourth transmission and reception periods, the receiving antenna RX2 receives the reflected signal (e.g., the second reflected signal) corresponding to the first signal FS3.

In another embodiment, the reflected signals corresponding to the sawtooth wave first signals FS2 and FS4 shown in FIG. 6A may be adopted as an example. In the first and second transmission and reception periods, the receiving antenna RX1 receives the reflected signal (e.g., the first reflected signal) corresponding to the first signal FS3. In the third and fourth transmission and reception periods, the receiving antenna RX2 receives the reflected signal (e.g., the second reflected signal) corresponding to the first signal FS4.

The two transmitting antennas TX1 and TX2 and the two receiving antennas RX1 and RX2 may form 4 transmitting and receiving combinations. Each transmitting and receiving combination includes a combination of one of the two transmitting antennas TX1 and TX2 and one of the two receiving antennas RX1 and RX2. For example, "TX1+RX1" shown in FIG. 6A represents the transmitting and receiving combination TRC2 of the transmitting antenna TX1 and the receiving antenna RX1, "TX1+RX2" represents the transmitting and receiving combination TRC2 of the transmitting antenna TX1 and the receiving antenna RX2, "TX2+RX1" represents the transmitting and receiving combination TRC2 of the transmitting antenna TX2 and the receiving antenna RX1, and "TX2+RX2" represents the transmitting and receiving combination TRC2 of the transmitting antenna TX2 and the receiving antenna RX2.

In this embodiment, in the first and second transmission and reception periods, the first detection mode corresponding to the first transmission signal (corresponding to the first signal FS1 or FS2 having a bandwidth from frequency f1 to frequency f2) is executed. In the third and fourth transmission and reception periods, the second detection mode corresponding to the second transmission signal (corresponding to the first signal FS3 or FS4 having a bandwidth from frequency f3 to frequency f4) is executed. In one embodiment, the range resolution of the first detection mode using the first transmission signal with a smaller bandwidth (corresponding to the bandwidth from frequency f1 to frequency f2) is less than the range resolution of the second detection mode using the second transmission signal with a larger bandwidth (corresponding to the bandwidth from frequency f3 to frequency f4).

In one embodiment, referring to FIG. 2B, the amplifier PA included in the transmitting circuit 11 amplifies the two transmission signals expected to be transmitted by the transmitting antennas TX1 and TX2. In addition, the amplifier PA provides corresponding power, gain and/or impedance matching according to the frequency band size of the transmission signal.

It should be noted that the output power may still be adjusted due to antenna gain, poor matching, or other factors.

In one embodiment, referring to FIG. 2B, the low noise amplifier LNA included in the receiving circuit 14 amplifies the two reflected signals received by the receiving antennas RX1 and RX2. In addition, the low noise amplifier LNA provides corresponding gain and/or impedance matching respectively according to the frequency band size of the reflected signal.

FIG. 6B is a schematic diagram of two-dimensional detection according to another embodiment of the disclosure. Referring to FIG. 2B, FIG. 6A and FIG. 6B, under the architecture of FIG. 2B (e.g., two transmitting antennas TX1, TX2 and two receiving antennas RX1, RX2), and operating under the switching of the transmitting and receiving combination TRC2 shown in FIG. 6A, distance information and angle information may be determined. The angle information may be the direction or angle of the external object compared to the radar apparatuses 10, 10-2.

In one embodiment, since the distance λ_{D} between the transmitting antennas TX1 and TX2 is set to λ_{HB}/2, and λ_{HB} is the wavelength of whichever center frequency is higher between the transmission signal transmitted by the transmitting antenna TX1 and the transmission signal transmitted by the transmitting antenna TX2, the field of view that the transmission signal corresponding to the higher center frequency may cover on the radar coordinates is ∠HB, the field of view that the transmission signal corresponding to the lower center frequency may cover on the radar coordinates is ∠LB, and ∠LB is narrower than ∠HB. Furthermore, the relationship between ∠LB and ∠HB may be expressed as ∠LB=F_{d}×±∠HB, where the coefficient F_{d} is f_{LB}/f_{HB}, in which f_{LB} is the center frequency of the transmission signal with a lower center frequency, and f_{HB} is the center frequency of the transmission signal with a higher center frequency. This embodiment assumes that the center frequency of the transmission signal with a larger bandwidth is f_{LB}, and the center frequency of the transmission signal with a smaller bandwidth is f_{HB}. To ensure consistency in the calculation of angle information, when calculating angle information for a transmission signal with a lower center frequency, it is necessary to use the coefficient F_{d} to perform reverse calculations to achieve the effect of compensating for angle information errors. For example, for a transmission signal with a lower center frequency, the angle calculation process requires division by the coefficient F_{d}. Taking FIG. 6B as an example, the range of ∠LB is from +90°×F_{d} to -90° ×F_{d}.

In the embodiment of the disclosure, transmission signals with different bandwidths are alternately generated and transmitted in a time-division manner, and the receiving antennas RX1 and RX2 alternately receive corresponding reflected signals in a time-division manner. In this way, when the two transmission signals are designed for narrow band applications and wide band applications respectively, time division interlace sensing (TDIS), that is, two detection modes that combine narrow band and wide band, may be provided. When the two transmission signals are designed to have different center frequencies, dual-band detection may be provided.

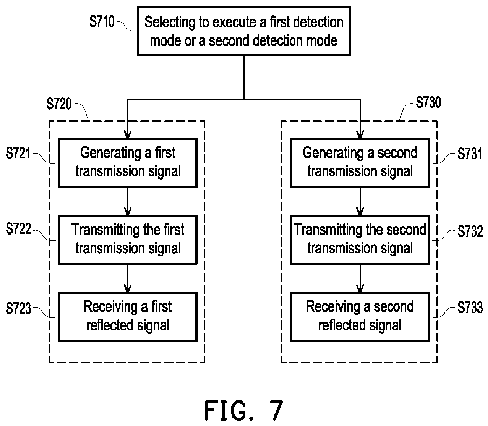

FIG. 7 is a flowchart of a radar detecting method according to an embodiment of the disclosure. Referring to FIG. 7, the first detection mode or the second detection mode is selected to be executed (step S710). The detection power of the first detection mode is greater than the detection power of the second detection mode. The execution of the first detection mode (step S720) includes: generating a first transmission signal (step S721), transmitting the first transmission signal (step S722), and receiving a first reflected signal (step S723). The first reflected signal is generated by the first transmission signal being reflected by an external object. The execution of the second detection mode (step S730) includes: generating a second transmission signal (step S731), transmitting the second transmission signal (step S732), and receiving a second reflected signal (step S733). The second reflected signal is generated by the second transmission signal being reflected by the external object. In addition, the bandwidth of the second transmission signal is different from the bandwidth of the first transmission signal, and the bandwidth of the second reflected signal is different from the bandwidth of the first reflected signal.

The implementation details of each step in FIG. 7 have been described in detail in the foregoing embodiments and implementation method, and are not repeated herein. In addition to being implemented in the form of circuits, each step and implementation details of the embodiments of the disclosure may also be implemented by the processor in the form of software.

To sum up, in the radar apparatus and the radar detecting method according to the embodiment of the disclosure, by means of time-division transmission of signals with varying bandwidths, and time-division reception of reflected signals with differing bandwidths, two detection modes may be executed in an alternating manner. Thus, when operating in narrow band and wide band applications, the characteristics of the two technologies (e.g., the longer detection range of narrow band applications and the finer range resolution of wide band applications) may be combined to obtain more complete spatial information when detecting an external object.

## Claims

1. A radar apparatus (10, 10-1, 10-2, 10-3, 10-4), **characterized by** comprising:
a transmitting circuit (11), used to generate a first transmission signal and a second transmission signal, wherein a bandwidth of the first transmission signal is different from a bandwidth of the second transmission signal;
a transmitting antenna system (12), used to transmit the first transmission signal and the second transmission signal; and
a receiving antenna system (13), used to receive a first reflected signal, wherein the first reflected signal is generated by reflection of the first transmission signal by an external object (O), and the receiving antenna system (13) is used to receive a second reflected signal, wherein the second reflected signal is generated by reflection of the second transmission signal by the external object (O), and wherein a bandwidth of the first reflected signal is different from a bandwidth of the second reflected signal;
wherein the first transmission signal and the first reflected signal are used for a first detection mode, and the second transmission signal and the second reflected signal are used for a second detection mode, detection power of the first detection mode is greater than detection power of the second detection mode.

2. The radar apparatus (10, 10-1, 10-2, 10-3, 10-4) according to claim 1, **characterized in that** range resolution of the first detection mode is less than range resolution of the second detection mode.

3. The radar apparatus (10, 10-1, 10-2, 10-3, 10-4) according to claim 1, **characterized in that** the bandwidth of the first transmission signal is less than the bandwidth of the second transmission signal, the bandwidth of the first reflected signal is less than the bandwidth of the second reflected signal.

4. The radar apparatus (10, 10-1, 10-2, 10-3, 10-4) according to claim 1, further **characterized by** comprising a control circuit (15) coupled to the transmitting circuit (11) and used to generate one or more control signals, wherein the one or more control signals change corresponding to a period of a first signal.

5. The radar apparatus (10, 10-1, 10-2, 10-3, 10-4) according to claim 4, **characterized in that** a frame time comprises a plurality transmission and reception periods, the radar apparatus (10) is used to select to execute only one of the first detection mode or the second detection mode in each of the transmission and reception periods respectively during the frame time according to the one or more control signals.

6. The radar apparatus (10, 10-1, 10-2, 10-3, 10-4) according to claim 4, further **characterized by** comprising a selection circuit (16), coupled to the control circuit (15) and the receiving antenna system (13), wherein a frame time comprises a plurality of transmission and reception periods, the receiving antenna system (13) comprises a first receiving antenna (RX1) and a second receiving antenna (RX2), the selection circuit (16) is used to select only the first receiving antenna (RX1) to receive the first reflected signal or to select only the second receiving antenna (RX2) to receive the second reflected signal in each of the transmission and reception periods respectively during the frame time according to the one or more control signals.

7. The radar apparatus (10, 10-1, 10-3, 10-4) according to claim 4, **characterized in that** a frame time comprises a plurality transmission and reception periods, the transmitting antenna system (12) comprises a first transmitting antenna (TX1), the transmitting circuit (11) is used to select to generate only one of the first transmission signal or the second transmission signal in each of the transmission and reception periods respectively during the frame time according to the one or more control signals, so that the first transmitting antenna (TX1) selects to transmit only one of the first transmission signal or the second transmission signal in each of the transmission and reception periods respectively during the frame time.

8. The radar apparatus (10, 10-2, 10-3, 10-4) according to claim 4, further **characterized by** comprising a selection circuit (16), coupled to the control circuit (15) and the transmitting antenna system (12), wherein a frame time comprises a plurality transmission and reception periods, the transmitting antenna system (12) comprises a first transmitting antenna (TX1) and a second transmitting antenna (TX2), the transmitting circuit (11) is used to select to generate only one of the first transmission signal or the second transmission signal in each of the transmission and reception periods respectively during the frame time according to the one or more control signals, and the selection circuit (16) is used to select only the first transmitting antenna (TX1) to transmit one of the first transmission signal and the second transmission signal, or to select only the second transmitting antenna (TX2) to transmit one of the first transmission signal and the second transmission signal in each of the transmission and reception periods respectively during the frame time according to the one or more control signals.

9. The radar apparatus (10, 10-1, 10-2, 10-3, 10-4) according to claim 4, further **characterized by** comprising:
a frequency synthesizer (171) or a pulse generator (172), coupled to the control circuit (15) and used to generate the first signal, wherein the first signal is a continuous wave signal or a pulse signal; and
a clock generator (19), coupled to the frequency synthesizer (171) or the pulse generator (172) and used to generate a clock signal, wherein the frequency synthesizer (171) or the pulse generator (172) generates the first signal according to the clock signal, and the control circuit (15) synchronizes the first signal according to the clock signal.

10. The radar apparatus (10, 10-1, 10-2, 10-3, 10-4) according to claim 5, further **characterized by** comprising a receiving circuit (14) and a computing processor (20), wherein the first reflected signal or the second reflected signal form a radio frequency signal, the receiving circuit (14) is used to generate an internal signal according to the radio frequency signal and the first signal, the internal signal comprises a plurality of internal sub-signals generated corresponding to the transmission and reception periods in the frame time, the computing processor (20) is coupled to the receiving circuit (14) and is used to determine spatial information of the external object (O) according to the internal sub-signals.

11. The radar apparatus (10-1, 10-2, 10-3, 10-4) according to claim 10, **characterized in that** the transmitting circuit (11) further comprises an amplifier (PA), the amplifier (PA) is coupled to the transmitting antenna system (12), the receiving circuit (14) further comprises a low noise amplifier (LNA), the low noise amplifier (LNA) is coupled to the receiving antenna system (13), and the amplifier (PA) is used to output different powers in the first detection mode and the second detection mode according to the one or more control signals.

12. The radar apparatus (10, 10-1, 10-3, 10-4) according to claim 4, further **characterized by** comprising a selection circuit (16), a first matching circuit (131), a second matching circuit (132), and a third matching circuit (121), wherein the transmitting antenna system (12) comprises a first transmitting antenna (TX1), the receiving antenna system (13) comprises a first receiving antenna (RX1) and a second receiving antenna (RX2), the first matching circuit (131) is coupled between the selection circuit (16) and the first receiving antenna (RX1), the second matching circuit (132) is coupled between the selection circuit (16) and the second receiving antenna (RX2), the third matching circuit (121) is coupled between the transmitting circuit (11) and the first transmitting antenna (TX1), wherein a matching bandwidth of the first matching circuit (131) is less than a matching bandwidth of the second matching circuit (132), a matching bandwidth of the third matching circuit (121) is greater than the matching bandwidth of the first matching circuit (131).

13. The radar apparatus (10, 10-2, 10-3, 10-4) according to claim 4, further **characterized by** comprising a selection circuit (16), a first matching circuit (131), a second matching circuit (132), a third matching circuit (121), and a fourth matching circuit (122), wherein the transmitting antenna system (12) comprises a first transmitting antenna (TX1) and a second transmitting antenna (TX2), the receiving antenna system (13) comprises a first receiving antenna (RX1) and a second receiving antenna (RX2), the first matching circuit (131) is coupled between the selection circuit (16) and the first receiving antenna (RX1), the second matching circuit (132) is coupled between the selection circuit (16) and the second receiving antenna (RX2), the third matching circuit (121) is coupled between the selection circuit (16) and the first transmitting antenna (TX1), the fourth matching circuit (122) is coupled between the selection circuit (16) and the second transmitting antenna (TX2), wherein a matching bandwidth of the first matching circuit (131) is less than a matching bandwidth of the second matching circuit (132), a matching bandwidth of the third matching circuit (121) is greater than the matching bandwidth of the first matching circuit (131), a matching bandwidth of the fourth matching circuit (122) is greater than the matching bandwidth of the first matching circuit (131).

14. A radar detecting method, **characterized by** comprising:
selecting to execute a first detection mode or a second detection mode;
wherein executing the first detection mode comprises:
generating a first transmission signal;
transmitting the first transmission signal; and
receiving a first reflected signal, wherein the first reflected signal is generated by reflection of the first transmission signal by an external object (O);
wherein executing the second detection mode comprises:
generating a second transmission signal, wherein a bandwidth of the second transmission signal is different from a bandwidth of the first transmission signal;
transmitting the second transmission signal; and
receiving a second reflected signal, wherein the second reflected signal is generated by reflection of the second transmission signal by the external object (O), and wherein a bandwidth of the second reflected signal is different from a bandwidth of the first reflected signal;
wherein detection power of the first detection mode is greater than detection power of the second detection mode.

15. A radar apparatus (10, 10-1, 10-2, 10-3, 10-4), **characterized by** comprising:
a transmitting circuit (11), used to generate a first transmission signal and a second transmission signal, wherein a bandwidth of the first transmission signal is different from a bandwidth of the second transmission signal;
a transmitting antenna system (12), used to transmit the first transmission signal and the second transmission signal;
a receiving antenna system (13), comprising a first receiving antenna (RX1) and a second receiving antenna (RX2), wherein the first receiving antenna (RX1) is used to receive a first reflected signal, wherein the first reflected signal is generated by reflection of the first transmission signal by an external object (O), wherein the second receiving antenna (RX2) is used to receive a second reflected signal, wherein the second reflected signal is generated by reflection of the second transmission signal by the external object (O), and wherein a bandwidth of the first reflected signal is different from a bandwidth of the second reflected signal;
a control circuit (15), used to generate one or more control signals; and
a selection circuit (16), coupled to the control circuit (15) and the receiving antenna system (13), and used to select the first receiving antenna (RX1) to receive the first reflected signal or select the second receiving antenna (RX2) to receive the second reflected signal according to the one or more control signals generated by the control circuit (15).
